# EUROPEAN PATENT SPECIFICATION

(11) **EP 2 811 461 B1**
(45) Date of publication and mention of the grant of the patent: **05.09.2018**
(21) Application number: 14162531.9
(22) Date of filing: 31.03.2014
(51) Int. Cl.: G06T 11/00

(54) **Fast pattern interpolation with parallel coherent random walk searching**
Schnelle Strukturinterpolation mit paralleler kohärenter zufälliger Verlaufssuche
Interpolation rapide de formes avec recherche de parcours aléatoire cohérente

(30) Priority: 03.06.2013 US 201313908969
(43) Date of publication of application: 10.12.2014
(73) Proprietor: Disney Enterprises, Inc., Burbank, CA 91521 (US)
(72) Inventor: Eisenacher, Christian, Burbank, CA 91502 (US); Akim, Svetlana, 97500 Evelsbach (DE)
(74) Representative: Dr. Weitzel & Partner

(56) References cited:
- US-A1- 2005 093 875
- US-A1- 2013 106 890
- P Panareda Busto ET AL: "Instant Texture Synthesis by Numbers" In: "Instant Texture Synthesis by Numbers", 1 January 2010 (2010-01-01), XP055148144, * abstract * * figures 1,2,4,5 * * sections 4,4.1,4.2,5.1 *
- TAKESHI SAITOH ET AL: "Transient texture synthesis based on multiple templates", MACHINE GRAPHICS AND VISION, INSTITUTE OF COMPUTER SCIENCE, WARZAW, PL, vol. 12, no. 4, 1 April 2003 (2003-04-01), pages 525-537, XP009180853, ISSN: 1230-0535
- ROLAND RUITERS ET AL: "Patch-based Texture Interpolation", COMPUTER GRAPHICS FORUM, vol. 29, no. 4, 26 June 2010 (2010-06-26), pages 1421-1429, XP055135235, ISSN: 0167-7055, DOI: 10.1111/j.1467-8659.2010.01739.x
- LI-YI WEI: "Texture synthesis by fixed neighborhood searching", INTERNET CITATION, November 2001 (2001-11), pages 1-132, XP002608571, Retrieved from the Internet: URL:http://www-graphics.stanford.edu/paper s/liyiwei_thesis/thesis_1side.pdf [retrieved on 2010-11-08]

## Description

### BACKGROUND

Example based texture synthesis is one of the most versatile, powerful, and widely used techniques in image processing. A pattern exemplar may be synthesized into a high quality texture of arbitrary size, which may then be utilized for image or video modification, noise reduction, three-dimensional texture mapping, and other image processing tasks.

Example based texture synthesis may also be used to produce texture compositions in which distinct texture patterns are blended using techniques such as texture by numbers (TBN). TBN allows artists to define texture areas so as to produce high quality, visually consistent renderings. However, TBN can only reproduce patterns and transitions among patterns that are present in an exemplar provided as an input to the TBN process. Consequently, an artist must typically prepare not only an input exemplar containing all desired texture patterns, the artist must ensure that all transitions among the patterns in all desired directions are present in the input exemplar as well. Due to the burden imposed by manual preparation of these input exemplars, artists have been reluctant to adopt TBN for synthesis of texture compositions despite its potential advantages.

US 2013/106890 A1 discloses parallel coherent random walk search for image processing, wherein a method is provided comprising selecting a present candidate from coherent texels of a target texel in an output texture, assigning a position of the present candidate as a random search center position within an input exemplar, and repeating iteration of a random walk search while an area exceeds a cut-off.

### SUMMARY

According to the present invention there is provided a method according to claim 1 and a system according to claim 9. The subclaims describe preferred embodiments.

According to a first embodiment there is provided a method for image processing, the method comprising:
receiving first and second pattern exemplars corresponding respectively to first and second patterns for use in a composite image, and a blend map for merging the first and second pattern exemplars; and
determining a first target image corresponding to the first pattern exemplar and including a first plurality of one of pixels or texels, utilizing a correspondence search process based on the blend map, wherein each of the first plurality of pixels or texels is synthesized using a respective blended search neighborhood generated from a blend of corresponding neighborhoods in the first and second pattern exemplars based on the blend map to search the first pattern exemplar;
determining a second target image corresponding to the second pattern exemplar and including a second plurality of one of pixels or texels, utilizing the correspondence search process based on the blend map, wherein each of the second plurality of pixels or texels is synthesized using a respective blended search neighborhood generated from the blend of corresponding neighborhoods in the first and second pattern exemplars based on the blend map to search the second pattern exemplar; and
merging the first and second target images to produce the composite image including the first and second patterns, wherein transitions between the first and second patterns in the composite image are generated automatically in real-time.

Especially the method, wherein the correspondence search process comprises a parallel coherent random walk search.

Especially the method, wherein the correspondence search process includes a first series of parallel coherent random walk searches for determining the first target image and a second series of parallel coherent random walk searches for determining the second target image, the first series and the second series of parallel coherent random walk searches being performed substantially concurrently.

Especially the method, further comprising merging the first and second target images to produce the composite image.

Especially the method, wherein the composite image comprises a texture composition.

Especially the method, further comprising merging the first and second target images to produce the composite image as an input exemplar for use in a texture synthesis process.

Especially the method, wherein the texture synthesis process is implemented using a texture by numbers (TBN) process.

Especially the method, further comprising synthesizing a texture composition including a first pattern corresponding to the first pattern exemplar, a second pattern corresponding to the second pattern exemplar, and transitions between the first and second patterns generated in the composite image.

Especially the method, further comprising synthesizing and merging the first and second target images to produce the composite image on a three-dimensional (3D) surface.

Especially the method, further comprising mapping the first pattern exemplar and the second pattern exemplar to a shared appearance space prior to utilizing the correspondence search process to determine the first and second target images.

According to another embodiment there is provided a system for performing image processing, the system comprising:
a system processor;
a memory;
an image processing application stored in the system memory, wherein the image processing application, under control of the processor, is adapted to perform the method for image processing.

Especially the system, wherein the correspondence search process comprises a parallel coherent random walk search.

Especially the system, wherein the correspondence search process utilized by the image processing application includes a first series of parallel coherent random walk searches for determining the first target image and a second series of parallel coherent random walk searches for determining the second target image, the first series and the second series of parallel coherent random walk searches being performed substantially concurrently.

Especially the system, wherein the image processing application is configured to merge the first and second target images to produce the composite image.

Especially the system, wherein the composite image comprises a texture composition.

Especially the system, wherein the image processing application is further configured to merge the first and second target images to produce the composite image as an input exemplar for use in a texture synthesis process.

Especially the system, wherein the image processing application is further configured to synthesize a texture composition including a first pattern corresponding to the first pattern exemplar, a second pattern corresponding to the second pattern exemplar, and transitions between the first and second patterns generated in the composite image.

Especially the system, wherein the image processing application is further configured to synthesize and merge the first and second target images to produce the composite image on a three-dimensional (3D) surface.

Especially the system, wherein the image processing application is further configured to map the first pattern exemplar and the second pattern exemplar to a shared appearance space prior to utilizing the correspondence search process to determine the first and second target images.

### BRIEF DESCRIPTION OF THE DRAWINGS

The features and advantages of the present application will become more readily apparent to those ordinarily skilled in the art after reviewing the following detailed description and accompanying drawings, wherein:
Figure 1 shows a flowchart describing an exemplary image processing method providing fast pattern interpolation with parallel coherent random walk searching;
Figure 2 presents an exemplary image processing system configured to provide fast pattern interpolation with parallel coherent random walk searching;
Figure 3A presents specific examples of weighted blend maps suitable for use in parallel coherent random walk searching, according to one implementation;
Figure 3B presents a specific example of parallel coherent random walk searching, according to one implementation;
Figure 4 shows a diagram depicting an exemplary use of fast pattern interpolation with parallel coherent random walk searching to produce a texture composition output; and
Figure 5 shows a diagram depicting an exemplary use of fast pattern interpolation with parallel coherent random walk searching to produce a composite image for use as an input exemplar to a texture synthesis process.

### DETAILED DESCRIPTION

The following description contains specific information pertaining to implementations in the present disclosure. One skilled in the art will recognize that the present disclosure may be implemented in a manner different from that specifically discussed herein. The drawings in the present application and their accompanying detailed description are directed to merely exemplary implementations. Unless noted otherwise, like or corresponding elements among the figures may be indicated by like or corresponding reference numerals. Moreover, the drawings and illustrations in the present application are generally not to scale, and are not intended to correspond to actual relative dimensions.

As explained above, example based texture synthesis may be used to produce texture compositions in which distinct texture patterns are blended using techniques such as texture by numbers (TBN). Despite its potential advantages, TBN can only reproduce patterns and transitions among patterns that are present in an exemplar provided as an input to the TBN process. Consequently, an artist must not only prepare an input exemplar containing all desired texture patterns, all transitions among the patterns in all desired directions must be present in the input exemplar as well. Due to the burden imposed by manual preparation of such input exemplars, artists have been reluctant to adopt TBN for synthesis of texture compositions.

Texture interpolation (hereinafter "texture interpolation" or "TI") techniques capable of producing high quality transitions between different texture patterns automatically do exist. However, conventional texture interpolation solutions either require substantial pre-processing, or are computationally too time consuming to be of practical use to artists, who may wish to create and modify a texture composition in real-time. Moreover, conventional texture interpolation solutions are unable to synthesize texture transitions over arbitrary three-dimensional (3D) surfaces.

The present application discloses methods and systems for fast pattern interpolation with parallel coherent random walk searching. The present solution is capable of producing high quality transitions between image patterns such as textures quickly and automatically, without requiring the substantial and burdensome pre-processing associated with conventional texture interpolation techniques. In addition, the present solution enables synthesis of image patterns and their transitions over arbitrary 3D surfaces. As a result, the present solution may be used to supplement TBN by substantially automating input exemplar preparation. Furthermore, in some instances, the present solution may be used in lieu of a TBN process to produce a desired output texture composition.

It is noted that although the present disclosure often refers to exemplary texture interpolation and texture synthesis processes in the interest of conceptual clarity, the present inventive principles may be applied to image processing more generally. Thus, in some implementations, the present solution may be used to produce texture compositions for use in feature film animation. In other implementations, however, the present concepts may be applied more generally to any pattern interpolation process directed to producing a composite image for use as an input to an image synthesis process, or for producing an output image composition directly.

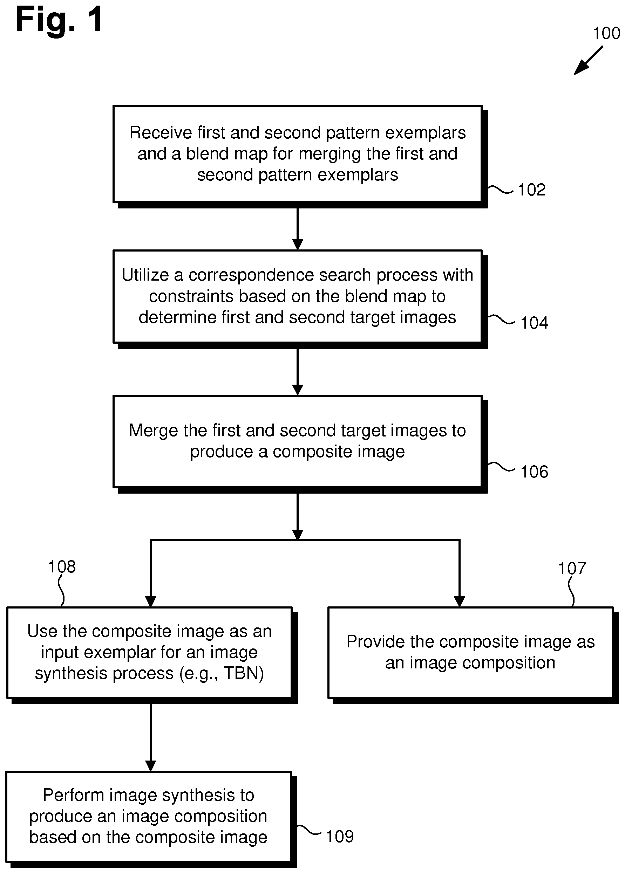

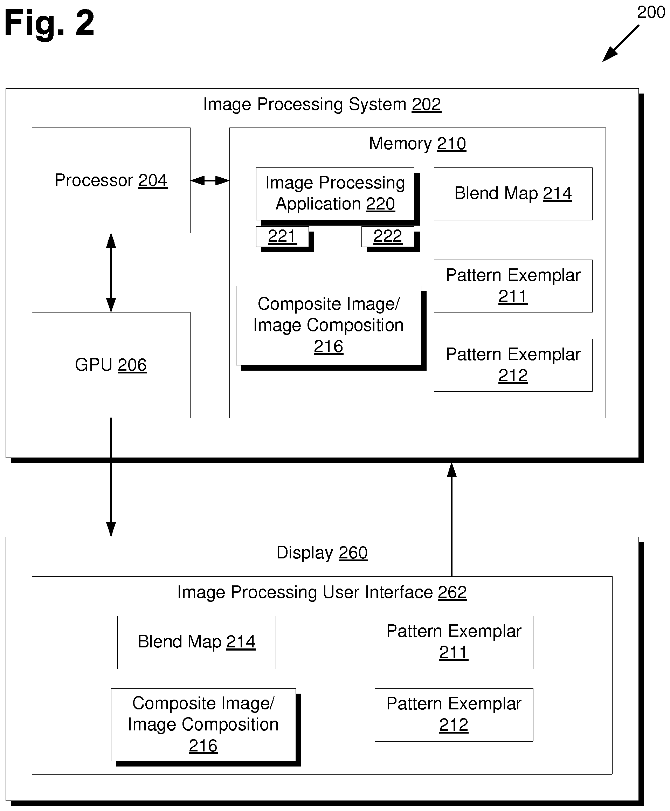

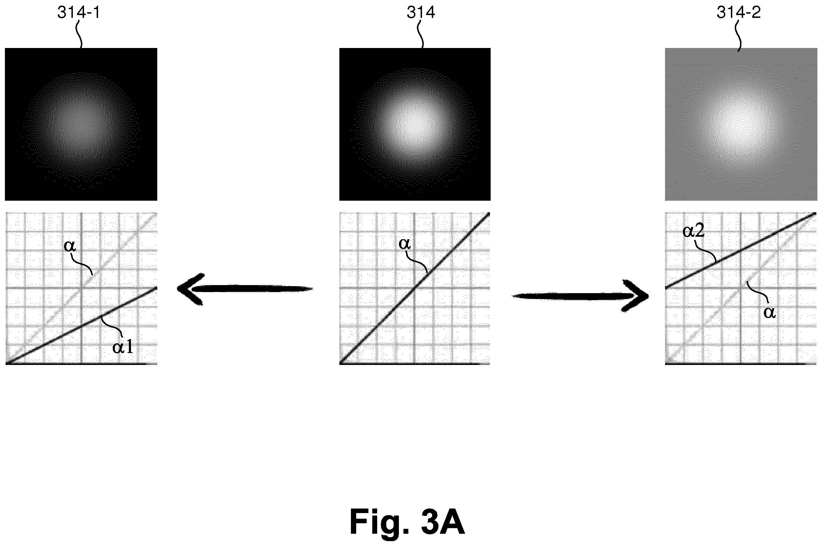

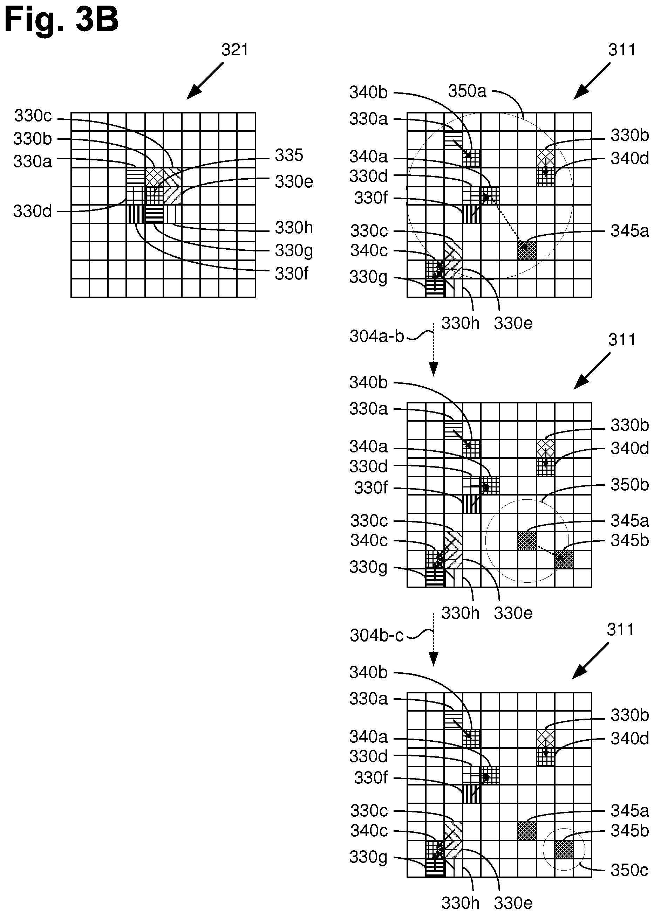

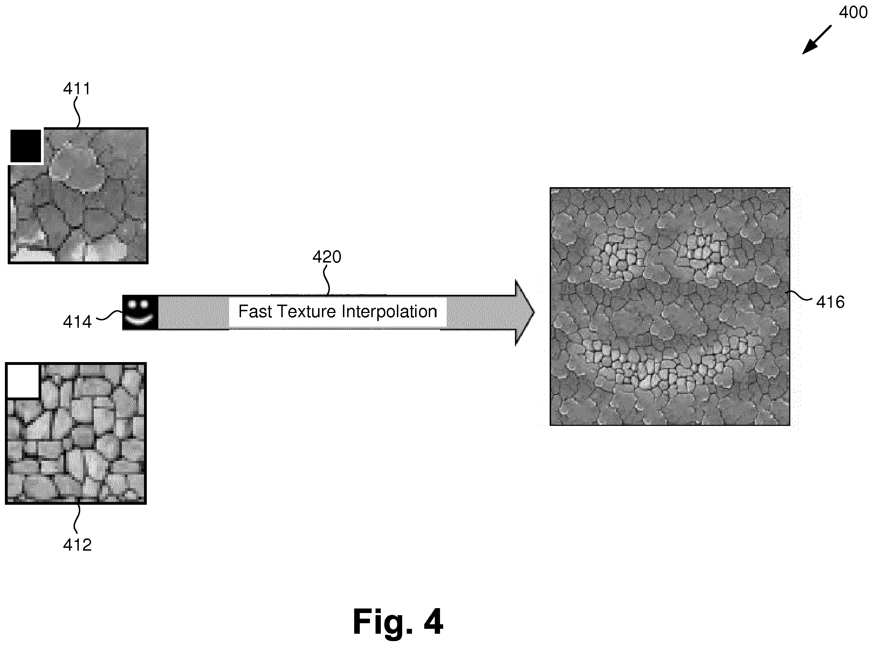

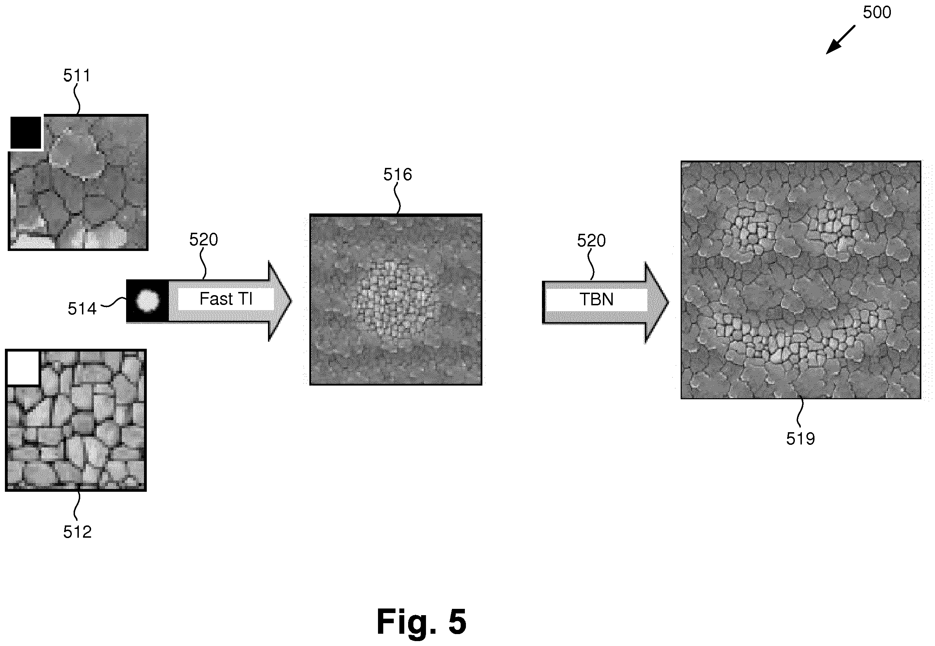

Figure 1 shows flowchart 100 describing an exemplary image processing method providing fast pattern interpolation with parallel coherent random walk searching, according to one implementation. Flowchart 100 will be discussed in conjunction with Figures 2, 3A, 3B, 4, and 5. Figure 2 shows exemplary image processing environment 200 including image processing system 210. Figure 3A presents specific examples of weighted blend maps suitable for use in parallel coherent random walk searching, while Figure 3B presents a specific example of parallel coherent random walk searching. Figure 4 is a diagram depicting an exemplary use of fast pattern interpolation with parallel coherent random walk searching to produce a texture composition as an output. Figure 5 is a diagram depicting an exemplary use of fast pattern interpolation with parallel coherent random walk searching to produce a composite image for use as an input exemplar to a texture synthesis process. With respect to the method described by flowchart 100, in Figure 1, is noted that certain details and features have been left out of flowchart 100 in order not to obscure the discussion of the inventive features in the present application.

Referring first to Figures 1 and 2, flowchart 100 begins with receiving respective first and second pattern exemplars 211 and 212, and blend map 214 for merging first and second pattern exemplars 211 and 212 (102). Receiving first and second pattern exemplars 211 and 212, and blend map 214 for merging first and second pattern exemplars 211 and 212 may be performed by image processing system 202, using image processing application 220 under the control of system processor 204.

Image processing system 202 may be implemented, for example, as a desktop computer, a laptop computer, a workstation, or a server. As shown in Figure 2, image processing system 202 includes system processor 204, graphics processing unit (GPU) 206, and system memory 210 storing image processing application 220. System processor 204 may be a multi-core processor configured to execute image processing application 220, as well as to utilize GPU 206 to present image processing user interface 262 to a user or artist (hereinafter "artist") on display 260. The artist may provide, view, and edit pattern exemplar 211, and/or pattern exemplar 212, and/or blend map 214, using image processing user interface 262. Also shown are respective first and second target images 221 and 222 determined using image processing application 220 and utilized by image processing application 220 to produce composite image or image composition 216. As shown in Figure 2, pattern exemplar 211, pattern exemplar 212, and blend map 214 may be received by image processing system 202 through image processing user interface 262, and may reside in system memory 210.

Flowchart 100 continues with utilizing a correspondence search process with one or more constraints based on blend map 214 to determine first and second target images 221 and 222 (104). Image processing application 220, under the control of system processor 204, is configured to utilize pattern exemplar 211, pattern exemplar 212, and blend map 214 to determine first and second target images 221 and 222. Accordingly, image processing application 220 may perform a correspondence search process as dual parallel coherent random walk searches using pattern exemplar 211, pattern exemplar 212, and blend map 214, to determine target images 221 and 222. The parallel coherent random walk searches may be designed to run as parallel processes on multiple cores of system processor 204 and/or multiple compute units of GPU 206. For example, the correspondence search process may include a first series of parallel coherent random walk searches for determining first target image 221 and a second series of parallel coherent random walk searches for determining second target image 222. Moreover, the first series and the second series of parallel coherent random walk searches may be performed substantially concurrently and in parallel with one another.

In correspondence search processes utilized in texture synthesis, a synthesis result for a pixel or texel may be corrected or improved through neighborhood matching the pixel or texel to the closest candidate in a corresponding pattern exemplar. Implementation of such a search as a parallel process is desirable to efficiently utilize modern multi-core processors and graphics processing units, in order to enable real-time interactive applications such as image or video editing with substantially immediate visual feedback.

According to the present fast pattern interpolation approach, however, the neighborhood used for neighborhood matching is not simply the corresponding neighborhood of the corresponding pattern exemplar. Rather, when correcting a pixel or texel in target image 221, the present solution uses a blend of corresponding neighborhoods from each of pattern exemplars 211 and 212 to generate a blended search neighborhood, which is then used for searching in pattern exemplar 211. Analogously, when correcting a pixel or texel in target image 222, the present solution uses a blend of corresponding neighborhoods from each of pattern exemplars 211 and 212 to generate a blended search neighborhood, which is then used for searching in pattern exemplar 212.

In some implementations, the blending of corresponding neighborhoods from pattern exemplars 211 and 212 may be performed according to substantially the exact blend specified by blend map 214, i.e., the alpha blend, in which case the blended search neighborhoods used to search each of pattern exemplars 211 and 212 will typically be the same. However, in some implementations, it may be advantageous or desirable to further constrain the correspondence search process by modifying the alpha blend to produce a weighted blend favoring the pattern exemplar being searched. For example, when correcting a pixel or texel in target image 221, the blend of corresponding neighborhoods from each of pattern exemplars 211 and 212 may be produced based on blend map 214, but may be weighted in favor of the corresponding neighborhood in pattern exemplar 211 to generate a weighted blended search neighborhood, which is then used for searching in pattern exemplar 211. Analogously, a weighted blended search neighborhood used to correct a pixel or texel in target image 222 may be based on blend map 214, but may be weighted in favor of the corresponding neighborhood in pattern exemplar 212.

Referring to Figure 3A, Figure 3A presents specific examples of weighted blend maps suitable for use in parallel coherent random walk searching, according to one implementation. Figure 3A includes blend map 314 specifying alpha blend "a", and weighted blend maps 314-1 and 314-2, based on blend map 314 but remapping α using a blend parameter beta "β". Blend map 314 corresponds to blend map 214, in Figure 2.

In view of the discussion above, it is understood that blend map 314 may be used to generate weighted blend map 314-1 for specifying the blending of corresponding neighborhoods from pattern exemplars 211 and 212 when searching pattern exemplar 211 to correct target image 221. Similarly, blend map 314 may used to generate weighted blend map 314-2 for specifying the blending of corresponding neighborhoods from pattern exemplars 211 and 212 when searching pattern exemplar 212 to correct target image 222. The blend parameter β is used to remap α, which ranges from [0..1], to α1 ranging from [0.. β], and to a2 ranging from [(β - 1)..1]. It is noted that a value of β = 0 corresponds to no blending, i.e., two completely independently determined target images 221 and 222. A value of β = 1, by contrast, corresponds to regular α blending according to blend map 314. In many instances a value of approximately β = 0.5 may be used advantageously.

Moving to Figure 3B, Figure 3B presents a specific example of a correspondence search performed using parallel coherent random walk searching, according to one implementation. Parallel k-coherence is utilized, as known in the art, with k=1, thus minimizing pre-processing by bypassing the calculation of similarity sets while accommodating the use of an appearance space framework for efficient parallel processing. Figure 3B shows pattern exemplar 311 and target image 321 determined using pattern exemplar 311 at an intermediate stage of pattern interpolation. Pattern exemplar 311 and target image 321 correspond respectively to pattern exemplar 211 and target image 221, in Figure 2. Although Figure 3B depicts a parallel coherent random walk search being performed on pattern exemplar 311 to determine target image 321, it is to be understood that an analogous search process may be used to determine a target image corresponding to target image 222 using a pattern exemplar corresponding to pattern exemplar 212. Moreover, such an analogous search process using pattern exemplar 212 to determine target image 222 may be performed in parallel with, and substantially concurrently with, the search process represented in Figure 3B.

It is noted that Figure 3B is shown as a simplified example with low-resolution two-dimensional (2D) images. However, in practice, target image 321 may be applied to arbitrary 3D objects and surfaces and may also be much larger in size than pattern exemplar 311. Furthermore, pattern exemplar 311 may include other data besides simple pixel or texel color data, such as coordinates or a multi-dimensional principal components analysis (PCA) projection of neighborhoods from pattern exemplar 311, using an Appearance Space Texture Synthesis (ASTS) framework. For example, the PCA projection may be at least 8 dimensions using at least 5x5 neighborhoods in the input image to provide an information dense appearance space. Thus, in some implementations, the method described by flowchart 100, in Figure 1, may further include mapping or projecting pattern exemplar 211 and pattern exemplar 212 to a shared appearance space prior to utilizing a correspondence search process to determine target images 221 and 222. Such a mapping or projection of pattern exemplars 211 and 212 to a shared appearance space may be performed by image processing application 220 under the control of system processor 204.

Beginning, for example, with target pixel or texel 335 of target image 321, the 3x3 blended, or weighted and blended, search neighborhood of coherent pixels or texels around target pixel or texel 335 are considered for search, including pixels/texels 330a, 330b, 330c, 330d, 330e, 330f, 330g and 330h. Because k=1 in the present exemplary parallel coherent random walk search, pattern exemplar 311 only includes one matching candidate for each pixel/texel 330a-330h. Thus, candidate 340a, 340b, 340c, and 340d are provided for search. Assuming that candidate 340a is the closest matching candidate, the random search may begin around the position of candidate 340a as the random search center position. Random candidate 345a may then be identified within an initially defined search area 350a around candidate 340a. Although circular search areas are shown in Figure 3B for simplicity, squares or other shapes may be utilized to define search area 350a in some implementations. Assuming that random candidate 345a is a better match than candidate 340a, the random walk search may reposition itself such that the new random search center position is defined by the position of random candidate 345a in pattern exemplar 311. On the other hand, if random candidate 345a remains the better match, then the search may continue at the same random search center position.

As noted above, pattern exemplar 311 may be transformed using PCA projection to an appearance space. Accordingly, the synthesis of target pixel or texel 335 may be independent of the synthesis state of the other pixels or texels in target image 321. Thus, the described parallel coherent random walk search may be applied in parallel for every pixel or texel in target image 321. As known in the art, rather than processing all pixels or texels in one parallel step, the parallel processing may also be subdivided into subgroups for improved synthesis quality, and a reduced size run-time neighborhood such as a 4 point neighborhood may be evaluated to accelerate processing speed. An analogous parallel processing can be utilized to determine target image 222 using pattern exemplar 212.

Progressing through search stage 304a-b, and assuming random candidate 345a is chosen as the new present candidate, the random walk search continues with identification of a new random candidate 345b within search area 350b around random candidate 345a. Search area 350b is reduced in size in comparison with search area 350a, for example by reducing a radius of a circular search area by a factor of two, or by reducing a side of a square search area by a factor of two. If random candidate 345b is a closer match than the present candidate, e.g., random candidate 345a, then the random walk search may move the random search center position to the position of random candidate 345b, as shown by search stage 304b-c. Search area 350c is also reduced in size when compared to search area 350b. When the size of a search area, such as search area 350c falls to or below a specified threshold area, the random walk search may stop, and present candidate 345b may be returned as the best candidate for correction of target pixel or texel 335.

After all pixels or texels of target images 221 and 222 are determined and all iterations of parallel processing are completed, flowchart 100, in Figure 1, continues with synthesizing and merging target images 221 and 222 to produce composite image/image composition 216 (106). Synthesis and merging of target images 221 and 222 may be performed by image processing application 220 under the control of system processor 204, and using blend map 214. For example, target images 221 and 222 may be synthesized and merged to produce composite image/image composition 216 using the α blending specified by blend map 314, in Figure 3A.

In some implementations, flowchart 100 may continue with providing composite image/image composition 216 as an image composition (107). Providing composite image/image composition 216 may be performed by image processing system 202 using image processing application 220, image processing user interface 262, and display 260. Referring to Figure 4, Figure 4 shows diagram 400 depicting such an implementation. Figure 4 includes texture exemplar 411, texture exemplar 412, blend map 414, and texture composition 416 produced using fast texture interpolation application 420. Texture exemplar 411, texture exemplar 412, blend map 414, fast texture interpolation application 420, and texture composition 416 correspond respectively to pattern exemplar 211, pattern exemplar 212, blend map 214, image processing application 220, and composite image/image composition 216, in Figure 2.

According to the implementation depicted by Figure 4, fast texture interpolation application 420 is configured to produce texture composition 416 using texture exemplar 411, texture exemplar 412, and blend map 414. Although texture composition 416 is shown as a 2D texture composition, fast texture interpolation application 420 may be configured to produce texture composition 416 as a 3D texture suitable for application to a 3D object or surface.

In other implementations, flowchart 100 may include providing composite image 216 to the artist, for example, through image processing user interface 262 on display 260, in Figure 2. As a result, the artist may use image processing user interface 262 to adjust pattern exemplar 211, and/or pattern exemplar 212, and/or blend map 214 in light of composite image 216. In other words, the present solution enables the artist to apply trial and error adjustment of art direction in real-time.

In some implementations, flowchart 100 may continue with using composite image 216 as an input exemplar for an image synthesis process (108). Moving to Figure 5, Figure 5 shows diagram 500 depicting use of composite image 516 as an input exemplar to a TBN texture synthesis process performed by image processing application 520. In addition to composite image 516 and image processing application 520, Figure 5 includes texture exemplar 511, texture exemplar 512, blend map 514, and texture composition 519 synthesized using a TBN texture synthesis process. Texture exemplar 511, texture exemplar 512, blend map 514, image processing application 520, and composite image 516 correspond respectively to pattern exemplar 211, pattern exemplar 212, blend map 214, image processing application 220, and composite image/image composition 216, in Figure 2.

Flowchart 100 may conclude with performing image or texture synthesis to produce texture composition 519 based on composite image 516 (109). In some implementations, image or texture synthesis may be performed by image processing application 520. As shown in Figure 5, for example, image processing application 520 may be configured to synthesize texture composition 519 so as to include a texture pattern corresponding to texture exemplar 511, another texture pattern corresponding to texture exemplar 512, and transitions between those patterns generated in composite image 516 using fast pattern interpolation as disclosed herein. It is reiterated that although texture composition 519 is shown as a 2D texture composition, the present solution is capable of producing texture composition 519 as a 3D texture suitable for application to a 3D object or surface.

Thus, the present application discloses a fast pattern interpolation solution with parallel coherent random walk searching. As described above the present solution is capable of producing high quality transitions between image patterns such as textures quickly and automatically. In addition, by utilizing a pixel or texel centered approach to pattern synthesis, the present solution advantageously enables synthesis of image pattern transitions over arbitrary 3D surfaces. Consequently, the present solution may be used to supplement existing image composition techniques by substantially automating exemplar preparation. Moreover, in some implementations, the present solution may be used to produce a desired output image or texture composition directly.

From the above description it is manifest that various techniques can be used for implementing the concepts described in the present application without departing from the scope of those concepts. Moreover, while the concepts have been described with specific reference to certain implementations, a person of ordinary skill in the art would recognize that changes can be made in form and detail without departing from the scope of those concepts. As such, the described implementations are to be considered in all respects as illustrative and not restrictive. It should also be understood that the present application is not limited to the particular implementations described herein, but many rearrangements, modifications, and substitutions are possible without departing from the scope of the present disclosure.

## Claims

1. A method (100) for image processing, the method comprising:
receiving first and second pattern exemplars (211, 311, 212) corresponding respectively to first and second patterns for use in a composite image (216), and a blend map (214, 314) for merging the first and second pattern exemplars (211, 311, 212); **characterized by** determining a first target image (221, 321) corresponding to the first pattern exemplar and including a first plurality of one of pixels or texels (335), utilizing a correspondence search process based on the blend map (214, 314), wherein each of the first plurality of pixels or texels (335) is synthesized using a respective blended search neighborhood (330a-330h) generated from a blend of corresponding neighborhoods in the first and second pattern exemplars (211, 311, 212) based on the blend map to search the first pattern exemplar;
determining a second target image (222) corresponding to the second pattern exemplar and including a second plurality of one of pixels or texels, utilizing the correspondence search process based on the blend map (214, 314), wherein each of the second plurality of pixels or texels is synthesized using a respective blended search neighborhood generated from the blend of corresponding neighborhoods in the first and second pattern exemplars (211, 311, 212) based on the blend map to search the second pattern exemplar; and
merging the first and second target images (221, 321, 222) to produce the composite image including the first and second patterns, wherein transitions between the first and second patterns in the composite image are generated automatically in real-time.

2. The method of claim 1, wherein the correspondence search process comprises a parallel coherent random walk search.

3. The method of claim 1, wherein the correspondence search process includes a first series of parallel coherent random walk searches for determining the first target image (221, 321) and a second series of parallel coherent random walk searches for determining the second target image (222), the first series and the second series of parallel coherent random walk searches being performed substantially concurrently.

4. The method of claim 1, wherein the composite image comprises a texture composition.

5. The method of claim 1, further comprising providing the composite image as an input exemplar for use in a texture synthesis process.

6. The method of claim 5, wherein the texture synthesis process is implemented using a texture by numbers (TBN) process.

7. The method of claim 1, further comprising synthesizing and merging the first and second target images (221, 321, 222) to produce the composite image on a three-dimensional (3D) surface.

8. The method of claim 1, further comprising mapping the first pattern exemplar and the second pattern exemplar to a shared appearance space prior to utilizing the correspondence search process to determine the first and second target images (221, 321, 222).

9. A system comprising a processor (204), a memory (210), and an image processing application (220) stored in the memory (210), wherein the image processing application (220), under control of the processor (204), is adapted to perform the method of any of claims 1-8.

## Patentansprüche

1. Verfahren (100) zur Bildverarbeitung, wobei das Verfahren Folgendes umfasst:
Empfangen einer ersten und einer zweiten Mustervorlage (211, 311, 212), die jeweils ersten und zweiten Mustern zur Verwendung in einem zusammengesetzten Bild (216) entsprechen, und einer Misch-Map (214, 314) zum Zusammenführen der ersten und der zweiten Mustervorlage (211, 311, 212);
**gekennzeichnet durch**
Bestimmen eines ersten Zielbilds (221, 321), das der ersten Mustervorlage entspricht und eine erste Vielzahl von entweder Pixeln oder Texeln beinhaltet, (335) unter Verwendung eines Entsprechungssuchprozesses auf Grundlage der Misch-Map (214, 314), wobei jedes der ersten Vielzahl von Pixeln oder Texeln (335) unter Verwendung einer entsprechenden vermischten Suchnachbarschaft (330a-330h) aufgebaut wird, die anhand einer Vermischung entsprechender Nachbarschaften in der ersten und der zweiten Mustervorlage (211, 311, 212) auf Grundlage der Misch-Map erstellt wurde, um die erste Mustervorlage zu durchsuchen;
Bestimmen eines zweiten Zielbilds (222), das der zweiten Mustervorlage entspricht und eine zweite Vielzahl von entweder Pixeln oder Texeln beinhaltet, unter Verwendung des Entsprechungssuchprozesses auf Grundlage der Misch-Map (214, 314), wobei jedes der zweiten Vielzahl von Pixeln oder Texeln unter Verwendung einer entsprechenden vermischten Suchnachbarschaft aufgebaut wird, die anhand der Vermischung entsprechender Nachbarschaften in der ersten und der zweiten Mustervorlage (211, 311, 212) auf Grundlage der Misch-Map erstellt wurde, um die zweite Mustervorlage zu durchsuchen; und
Zusammenführen des ersten und des zweiten Zielbilds (221, 321, 222) zum Erzeugen des zusammengesetzten Bilds, das die ersten und die zweiten Muster beinhaltet, wobei die Übergänge zwischen den ersten und den zweiten Mustern im zusammengesetzten Bild automatisch in Echtzeit erstellt werden.

2. Verfahren nach Anspruch 1, wobei der Entsprechungssuchprozess eine parallele kohärente Zufallsbewegungssuche umfasst.

3. Verfahren nach Anspruch 1, wobei der Entsprechungssuchprozess eine erste Reihe paralleler kohärenter Zufallsbewegungssuchen zum Bestimmen des ersten Zielbilds (221, 321) und eine zweite Reihe paralleler kohärenter Zufallsbewegungssuchen zum Bestimmen des zweiten Zielbilds (222) beinhaltet, wobei die erste Reihe und die zweite Reihe paralleler kohärenter Zufallsbewegungssuchen im Wesentlichen gleichzeitig durchgeführt werden.

4. Verfahren nach Anspruch 1, wobei das zusammengesetzte Bild eine Texturzusammensetzung umfasst.

5. Verfahren nach Anspruch 1, ferner umfassend das Bereitstellen des zusammengesetzten Bilds als Eingabevorlage zur Verwendung in einem Texturaufbauprozess.

6. Verfahren nach Anspruch 5, wobei der Texturaufbauprozess unter Verwendung eines Textur-durch-Zahlen(texture by numbers -TBN)-Prozesses umgesetzt wird.

7. Verfahren nach Anspruch 1, ferner umfassend das Aufbauen und Zusammenführen des ersten und des zweiten Zielbilds (221, 321, 22) zum Erzeugen des zusammengesetzten Bilds auf einer dreidimensionalen (3D-) Fläche.

8. Verfahren nach Anspruch 1, ferner umfassend das Abbilden der ersten Mustervorlage und der zweiten Mustervorlage in einem gemeinsamen Darstellungsraum vor dem Verwenden des Entsprechungssuchprozesses zum Bestimmen des ersten und des zweiten Zielbilds (221, 321, 222).

9. System, umfassend einen Prozessor (204), einen Speicher (210) und eine im Speicher (210) gespeicherte Bildverarbeitungsanwendung (220), wobei die Bildverarbeitungsanwendung (220) gesteuert vom Prozessor (204) dazu ausgelegt ist, das Verfahren nach einem der Ansprüche 1-8 durchzuführen.

## Revendications

1. Procédé (100) de traitement d'image, le procédé comprenant :
la réception de premier et second exemples de motif (211, 311, 212) correspondant respectivement à des premier et second motifs destinés à être utilisés dans une image composite (216), et une carte de mélange (214, 314) pour fusionner les premier et second exemples de motif (211, 311, 212) ;
**caractérisé par**
la détermination d'une première image cible (221, 321) correspondant au premier exemple de motif et incluant une première pluralité de pixels ou de texels (335), en employant un processus de recherche de correspondance basé sur la carte de mélange (214, 314), dans lequel chacun de la première pluralité de pixels ou de texels (335) est synthétisé à l'aide d'un voisinage de recherche mélangé (330a à 330h) respectif généré à partir d'un mélange de voisinages correspondants dans les premier et second exemples de motif (211, 311, 212) sur la base de la carte de mélange pour rechercher le premier exemple de motif ;
la détermination d'une seconde image cible (222) correspondant au second exemple de motif et incluant une seconde pluralité de pixels ou de texels, en employant un processus de recherche de correspondance basé sur la carte de mélange (214, 314), dans lequel chacun de la seconde pluralité de pixels ou de texels est synthétisé à l'aide d'un voisinage de recherche mélangé respectif généré à partir du mélange de voisinages correspondants dans les premier et second exemples de motif (211, 311, 212) sur la base de la carte de mélange pour rechercher le second exemple de motif ; et
la fusion des première et seconde images cibles (221, 321, 222) pour produire l'image composite incluant les premier et second motifs, dans lequel des transitions entre les premier et second motifs dans l'image composite sont générées automatiquement en temps réel.

2. Procédé selon la revendication 1, dans lequel le processus de recherche de correspondance comprend une recherche de marche aléatoire cohérente parallèle.

3. Procédé selon la revendication 1, dans lequel le processus de recherche de correspondance inclut une première série de recherches de marche aléatoire cohérentes parallèles pour déterminer la première image cible (221, 321) et une seconde série de recherches de marche aléatoire cohérentes parallèles pour déterminer la seconde image cible (222), la première série et la seconde série de recherches de marche aléatoire cohérentes parallèles étant effectuées sensiblement simultanément.

4. Procédé selon la revendication 1, dans lequel l'image composite comprend une composition de texture.

5. Procédé selon la revendication 1, comprenant en outre la fourniture de l'image composite en tant qu'exemple d'entrée destiné à être utilisé dans un processus de synthèse de texture.

6. Procédé selon la revendication 5, dans lequel le processus de synthèse de texture est implémenté à l'aide d'un processus de texture par numéros (TBN).

7. Procédé selon la revendication 1, comprenant en outre la synthèse et la fusion des première et seconde images cibles (221, 321, 222) pour produire l'image composite sur une surface tridimensionnelle (3D).

8. Procédé selon la revendication 1, comprenant en outre la mise en correspondance du premier exemple de motif et du second exemple de motif à un espace d'aspect partagé avant d'employer le processus de recherche de correspondance pour déterminer les première et seconde images cibles (221, 321, 222).

9. Système comprenant un processeur (204), une mémoire (210) et une application de traitement d'image (220) stockée dans la mémoire (210), dans lequel l'application de traitement d'image (220), sous la commande du processeur (204), est adaptée pour effectuer le procédé selon l'une quelconque des revendications 1 à 8.
